# EUROPEAN PATENT APPLICATION

(11) **EP 2 015 573 A1**
(43) Date of publication of application: **14.01.2009**
(21) Application number: 07301232.0
(22) Date of filing: 12.07.2007
(51) Int. Cl.: H04N 7/15, H04N 13/00

(54) **Telecomunication device and system**

(71) Applicant: France Télécom, 75015 Paris (FR)
(72) Inventor: Braquet, Vladimir FRANCE TELECOM JAPAN, 4-13-9 green h, Tokyo, Tokyo 180-0001 (JP); Plaspous, Cyril FRANCE TELECOM JAPAN, Palacio ikkebu, Tokyo, Tokyo 170-0013 (JP); Dupuis, Romary FRANCE TELECOM JAPAN, Shinjuku, Shinjuku-ku, Tokyo, Tokyo 160-0022 (JP)

(57) **Abstract**

The invention proposes a telecommunication system for transmitting data flows comprising 3D video data, said telecommunication system comprising a 3D video acquiring unit for acquiring a plurality of image flows from different viewpoints; a hardware element operable to process and compress the plurality of image flows into one compressed data flow, said compressed data flow comprising 3D video data for a subsequent 3D image flow generation; a transmitting element operable to communicate the compressed data flow over a communication network; a receiving unit for receiving the compressed data flow; a decompression unit operable to decompress the compressed data flow into a plurality of image flows, said plurality of image flows comprising 3D video data; a 3D application layer operable to process the plurality of image flows into 3D image flows; and a 3D display unit operable to display the 3D image flow.

## Description

### Field of the Invention

The present invention relates in general to an end-to-end telecommunication system operable to enable 3D video telephony or 3D video conferencing between mobile user equipments.

### Background of the Invention

Telecommunication networks provide a facility for communicating to and from a user equipment (UE) using video telephony, i.e. audio visual communication between or among UEs. Besides, 3D video displays, such as for instance 3D stereoscopic displays, are available to perform 3D video. Furthermore, 3D video is currently not supported for mobile UEs with the existing telecommunication infrastructures, notably due to bandwidth and interoperability limitations as mobile UEs, such as e.g. mobile phone, portable media player or tablet PC, are limited resource devices (LRD) with relatively small CPUs. In addition, upgrading the architecture components as well as the images formats would cause major investments for telecommunication operators.

Today there is a need for a 3D video solution that can be easily implemented on the existing telecommunication infrastructures.

### Summary of Invention

It is an object of the present system to overcome disadvantages and/or make improvement over the prior art.

To that extend, the invention proposes a telecommunication device which is arranged for transmitting data flows comprising 3D video data, said telecommunication system comprising:
- a 3D video acquiring unit for acquiring a plurality of image flows from different viewpoints,
- a hardware element operable to process and compress the plurality of image flows into one compressed data flow, said compressed data flow comprising 3D video data for a subsequent 3D image flow generation,
- a transmitting element operable to communicate the compressed data flow over a communication network.

Processing and compression of image flows imply high computing capacities. Mobile user equipments, or telecommunications devices, are, by definition, limited resources devices and have, thus, computing capacities and bandwidth limitations. In the device according to the invention, a hardware layer is used to add the required extra data processing capacities. This hardware layer may be e.g. a DSP (Digital Signal Processors), VLSI (Very Large Scale Integration Scale), ASIC (Application Specific Integrated Circuits) etc...

The invention also proposes a telecommunication system for transmitting data flows comprising 3D video data, said telecommunication system comprising:
- a 3D video acquiring unit for acquiring a plurality of image flows from different viewpoints,
- a hardware element operable to process and compress the plurality of image flows into one compressed data flow, said compressed data flow comprising 3D video data for a subsequent 3D image flow generation,
- a transmitting element operable to communicate the compressed data flow over a communication network,
- a receiving unit for receiving the compressed data flow,
- a decompression unit operable to decompress the compressed data flow into a plurality of image flows, said plurality of image flows comprising 3D video data,
- a 3D application layer operable to process the plurality of image flows into 3D image flows,
- a 3D display unit operable to display the 3D image flow.

Furthermore, interoperability between the different components of the system is assured since the transmitted data flow is independent of the display unit of the receiving mobile UE. This is achieved while keeping a satisfactory quality of the images. The system, by avoiding 3D display specific tasks before the compression of the data and by including the compression process of the data into the hardware layer, enables an efficient compression scheme allowing thus transmission on the telecommunication network.

The invention also relates to a method for transmitting data flows comprising 3D video data from a telecommunication device over a telecommunication network.

### Brief Description of the Drawings

Embodiments of the present invention will now be described by way of example only with reference to the accompanying drawings, where like parts are provided with corresponding reference numerals, and in which:
Figure 1 schematically illustrates a 3D video mobile telecommunication emitter according to an embodiment of the present invention;
Figure 2A schematically illustrates a 3D video mobile telecommunication receiver according to an embodiment of the present invention where the rendering unit is software based;
Figure 2B schematically illustrates a 3D video mobile telecommunication receiver according to an embodiment of the present invention where the rendering unit is software and hardware based;
Figure 3 schematically illustrates the functions of the 3D video mobile telecommunication emitting UE;
Figure 4 schematically illustrates the functions of the 3D video mobile telecommunication receiving UE;
Figure 5 schematically illustrates the capture and compression unit of the 3D video mobile telecommunication system;
Figure 6 schematically illustrates a 3-camera capture system where each camera's resolution is 800x600.

### Description of Preferred Embodiments

In the system according to the invention, a first mobile user equipment comprises cameras to capture 3D images, compress associated video signals and transmit the resulting data flow, using a video telephony or a video conferencing application, to a second mobile user equipment or more. This second UE receives and decompresses the resulting data flow, then builds and displays a 3D image. The first UE is called hereafter the emitting UE while the second UE is called the receiving UE. Sub-systems of the emitting and the receiving UEs are called unit or layer.

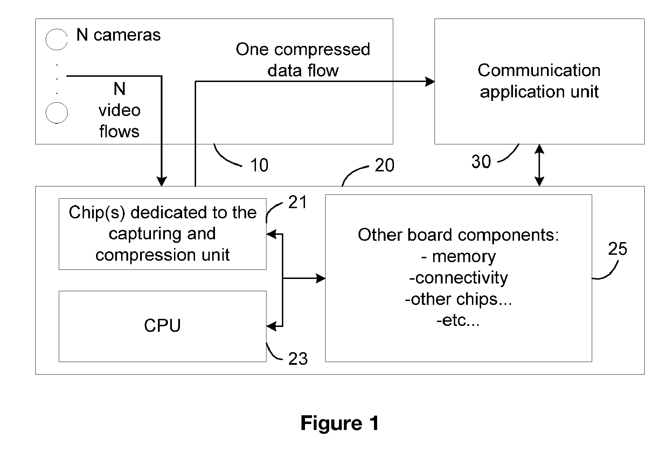

Referring to Figure 1, a telecommunication system is shown to comprise a video input unit 10, a computing unit 20 and a communication application unit 30. Video input unit 10, computing unit 20, communication application unit 30 may be found in an emitting UE.

The video input unit 10 is shown to generate at least two image flows, each delivered by a video camera. An alternative embodiment may be to use a video camera and a prism to generate two or more image flows. The man skilled in the art may think of other means of generating image flows. In the hereafter description, the video input unit 10 will be illustrated (but not limited to) as generating two image flows for simplification purposes.

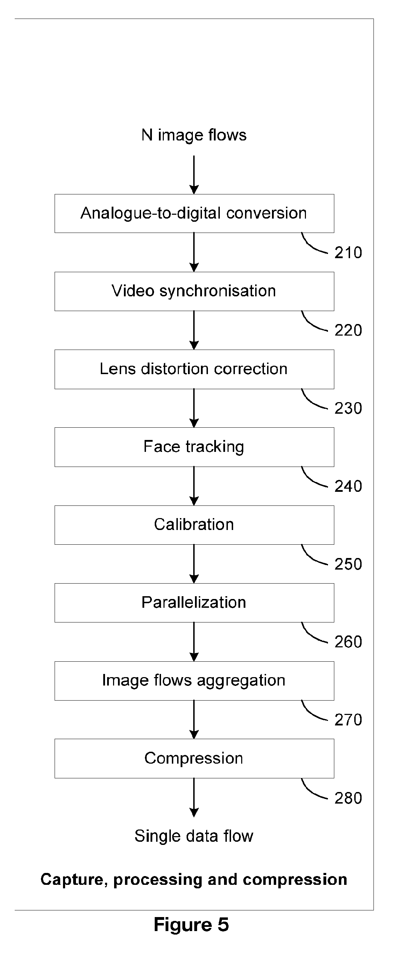

The computing unit 20 is shown to comprise at least one CPU (Central Processing Unit) 23, at least one chip 21 and other board components 25 such as for instance memory, connectivity, other additional chips etc... The CPU 23 is the mobile UE CPU in charge of running the mobile UE applications. The chip 21, driven by the CPU 23, is in charge of the capture, the processing and the compression of image flows. The functions carried out by chip 21 will be further described in relation to Figure 5 later on. The additional chips in the board components 25 may be used to have extra data processing capacities when needed. The chips may be e.g. DSP (Digital Signal Processors), VLSI (Very Large Scale Integration Scale), ASIC (Application Specific Integrated Circuits) etc...

The communication application 30 is a software-based video telephony application running on the CPU 23. Video telephony may be understood as point to point video telephony as well as video conferencing (point to multipoint). It can be based on any video telephony application like, for instance, the ones based on the H.323 or SIP protocols. The communication application 30 exists on both the emitting UE and the receiving UE, and is used to exchange data over the telecommunication network.

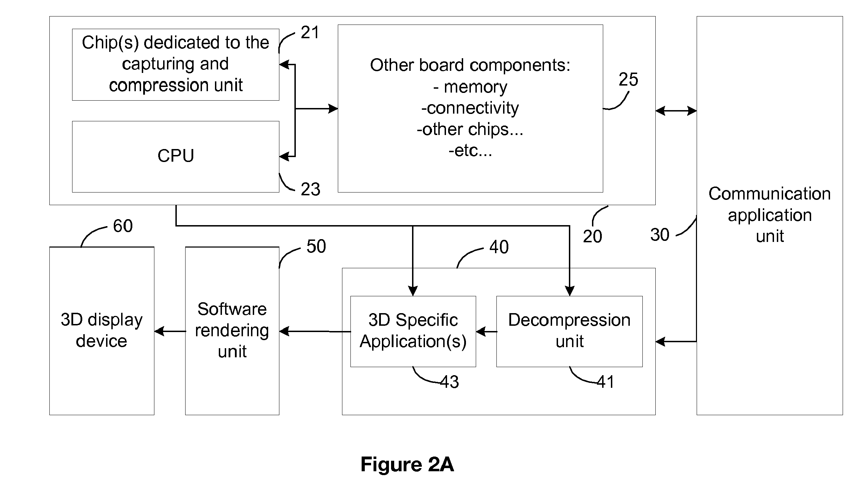

Referring to Figure 2A, a telecommunication system is shown to comprise a video output unit 40, a rendering unit 50 and a display unit 60. Whereas communication application 30, video output unit 40, rendering unit 50 and display unit 60 may be found on a receiving UE.

The video output unit 40 is shown to comprise the decompression unit 41 and the 3D specific application(s) 43. The 3D specific application 43 builds the output 3D image from the decompressed data flow received from the decompression unit 41.

The rendering unit 50 is the unit in charge of displaying the image on the 3D screen 60. The rendering unit may be a software rendering unit 50. The display unit 60 is composed of at least one of a 3D screen based on a hardware layer.

A 3D image is obtained using at least N, where N is at least two, video cameras 12, thus outputting the same number N of image flows. In order to transmit these image flows using compatible 2D transport means, a capture and compression process is needed to obtain a single data flow. Said capture and compression are realised by the unit 20 using the chip 21 which comprises a hardware layer. Chip 21 uses e.g. one, or a combination of, DSP, VLSI, FPGA or ASIC chip(s) dedicated to image processing and integrated in the processing unit 20. The data flow obtained by the compression process is thus communicated through the communication application 30, between the emitting UE and the receiving UE, to the video output unit 40. The communication application 30 is known by the skilled man as a video telephony application.

The compressed data flow comprising data associated with the N image flows is processed by the decompression unit 41 resulting in obtaining N image flows. The 3D specific application 43 sets up the adjustments which are function of the geometry of the capture and compression unit 14 and the display unit 60, for instance to set up the parallax between the different images, realized the cropping of the images etc... This 3D specific application 43 is software based to be easily upgradeable. The software rendering unit 50 is a software based application which adapts the image flow received from the video output unit 40 to the display unit 60. For instance, if the display unit 60 is a polarized projector, the software rendering unit 50 sends a left image to the left and a right image to the right ; if the display unit 60 is a barrier auto stereoscopic display unit, the software rendering unit 50 sends an interlaced image etc...

In order to be inter-operable with any 3D display of the receiving UE, the adaptation of the image flows to the display unit 60 of the receiving UE cannot be done before the transmission of the single data flow through the network as the output display is not necessarily known from the emitting UE. When the emitting UE adapts the image flows to a given type of display unit of a receiving UE, but communicates with another receiving UE having another type of display unit, the latter receiving UE is not able to construct a 3D image without a significant loss of resolution.

Indeed, 3D video requires sub-sampling of the image flows in order to adapt said image flows to a 3D display device. Sub-sampling consists in selecting and keeping a certain amount of pixels according to a pre-defined pattern, taking into account in particular the technology of the 3D display device. Thus, non compliant screens (from different UEs exchanging data flows) having different sub-sampling schemes, are therefore strongly non interoperable. Were such UEs involved in 3D video telephony, the resulting resolution would hence be the smaller of the two. The method according to the invention, allows interoperability by avoiding this 3D display device specific sub-sampling on the emitting UE before transmission of the data flow. The receiving UE is hence in charge of the sub-sampling through its rendering system 50.

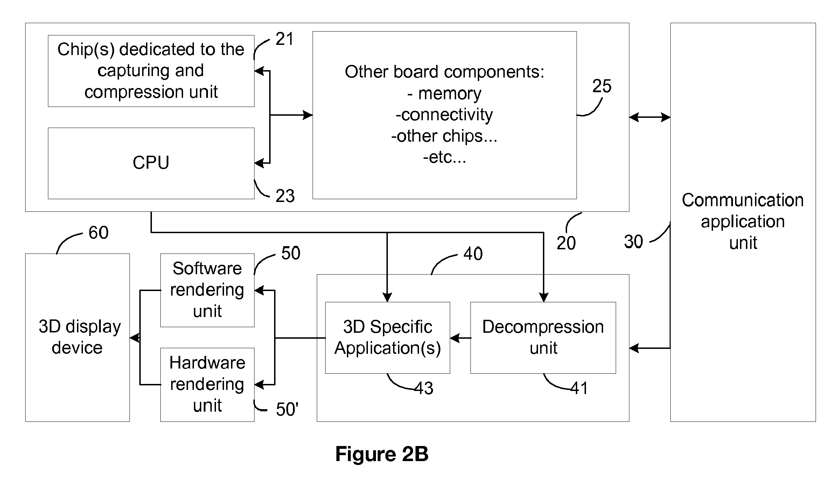

Referring to Figure 2B, an alternative embodiment of the telecommunication system according to the invention is shown. This embodiment uses the different elements described in relation to Figure 2A except for the rendering unit 50.

The 3D display makers may provide rendering tools in the hardware layer. Therefore, in such a case, there is the driver (software layer) which is driving the hardware rendering components. In this alternative embodiment, the rendering unit is composed of a software rendering unit 50 and of a hardware rendering unit 50'. The hardware rendering unit 50' includes at least one hardware component and is linked to the display unit 60. Both software rendering unit 50 and hardware rendering unit 50' operatively coupled fulfil the same function as the software rendering unit 50 of Figure 2A.

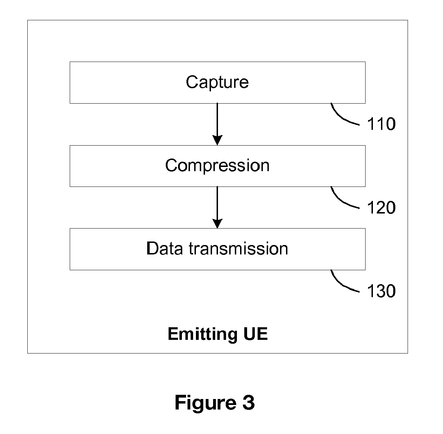

Referring to Figure 3, actions successively performed by the emitting UE are described. In a first step 110, the emitting UE proceeds first to the capture of image flows from several video cameras. In a first step 120, the emitting UE proceeds to the compression of resulting data flow. Eventually, in a final step 130, the emitting UE proceeds with the transmission of the compressed data flow to the receiving UE using the communication application 30.

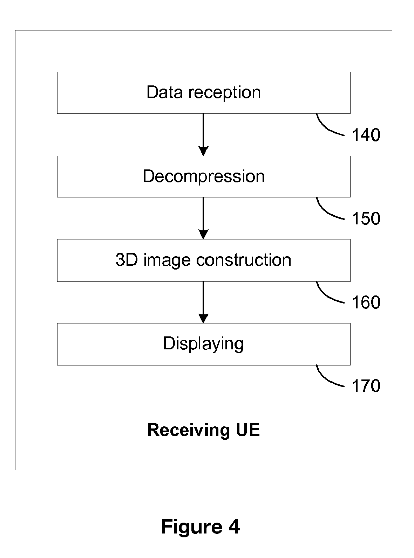

Referring to Figure 4, actions successively performed by the receiving UE are described. In a first step 140, the receiving UE proceeds first to the reception of the compressed data flow using the communication application 30. In a further step 150, the receiving UE proceeds to the decompression of the received compressed data flow. In a further step 160, the receiving UE constructs a 3D image from the decompressed data. In a final step 170, the receiving UE proceeds to the display of the resulting 3D image picture.

Referring to Figure 5, in order to capture, process and compress image flows, a series of operations may be carried out by the computing unit 20 and include:
- analogue-to-digital conversion 210 if needed: analogue to digital conversion may involve an anti aliasing filter component, a sampling step, a quantification step, but also other filtering steps;
- video synchronisation 220 if needed: the synchronization means that an ADC clock is common to all the camera so that the captured images are synchronized;
- lens distortion correction 230: lenses are not perfect systems, therefore it leads to image distortion, especially on the image borders (e.g. Gauss conditions are no more true). The solution is to filter the captured image in order to flatten the image;
- face tracking 240 if wanted: usual videophony systems often track the user's head in order to optimize the different steps to its position. It is also sensitive in the 3D world: since there is an optimal distance called zero parallax plane;
- calibration 250 if needed: calibration is the compensation of all the differences between each camera (light, axis, angles, etc.) by a filtering;
- parallelization 260 if needed: parallelization may be included in axis calibration of step 250;
- aggregation 270 of the N processed image flows into a single data flow by any usual method known of the man skilled in the art: aggregation may be useful in order to transmit a single image flow made from N processed image flows instead of transmitting said N image flows. Indeed, by doing that, there is no need of any new protocol or new multi-image flow API (Application Protocol Interface) to transmit the N image flows. Known API for transmitting one image flow may be re-used. Furthermore, by doing this, compression is more efficient in order to convert the resulting aggregated image flow into a single data flow as image flows are not mixed. There are several different methods to aggregate N image flows such as e.g. concatenation, frequency interlacing, etc... For example, a way of proceeding is to concatenate the N input image flows (generated by the different cameras) in order to create a larger image flow. Each larger image comprises the images taken from the different image flows at the same instant, concatenated into one single image. The input image flows may further be transformed by reducing the quantity of information, without decreasing significantly the quality of the images, using processing techniques commonly known by the man skilled in the art, in order to subsequently concatenate said image flows into one image.
- compression 280 allows reducing the size of the aggregated image flow by obtaining a single data flow consuming less bandwidth on the telecommunication network.

Some if not all of the operations may be carried out by chip 21 of Figure 1.

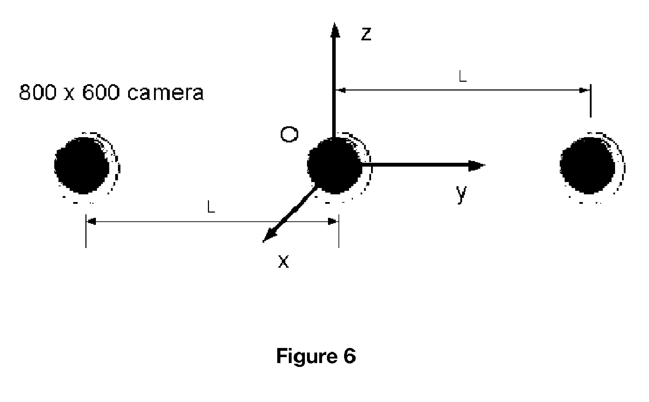

As an example to describe a further embodiment of the system according to the invention, Figure 6 shows a 3-camera capture system where each camera's resolution is 800 x 600. Said embodiment including a description of how the capture and compression parameters may be sent in messages exchanged using the videotelephony application, said parameters comprising:
- for the capturing unit:
   ➢ An integer which is the number of cameras,
   ➢ Three float arrays (one for each x, y and z coordinates) which are the coordinates of each camera in a referential. The array size is the number of cameras. Since the 3D effect depends only of the camera relative position the center of the referential is not so important. It would be better that the origin is at the center of the capturing unit or at one camera position,
   ➢ An integer couple which is the resolution of the cameras like [800, 600]
   The data to be transferred are:
   ➢ Number of cameras: 3
   ➢ x coordinates: [0, 0, 0]
   ➢ y coordinates: [-L, 0, L]
   ➢ z coordinates: [0, 0, 0]
   ➢ Resolution: [800,600]
- for the encoding part:
   ➢ An **integer** giving the encoding method.
      - 0 when all the captured pictures are stuck in a big picture without modification.
      - 1 when all the captured pictures are stuck in a big picture after cropping the unnecessary information. The cropping is done with respect to the display information.
      - 2 when all the captured pictured have been sub sampled (giving the display technology) and stuck in a big picture (without interlacing).
      - 3 when all the captured pictured have been sub sampled and interlaced. The interlacing is done with respect to the display information.
      - 4 when a depth map has been computed.
      - Etc.
   ➢ If the previous field was 0 or 1, we need to know how the pictures have been stuck. Therefore, we also need to transmit **two integer arrays** which are the x and y coordinates of each picture in the final picture. For instance ([1, 1, 1], [1, 2, 3]) means that the 3 captured pictures are stuck vertically. Another example is ([1, 1, 2, 2,], [1, 2, 1, 2]) means that the 4 captured pictures are stuck as a square.
- for the display unit:
   ➢ An **integer array** representing the 3D technology. The list is [a, b, c, d]
      - a is the 3D technology.
         ◆ 0 for no 3D technology.
         ◆ 1 for vertical parallax barrier.
         ◆ 2 for horizontal parallax barrier.
         ◆ 3 for step barrier (diagonal parallax barrier).
         ◆ 4 for horizontal lenticular lens.
         ◆ 5 for vertical lenticular lens.
         ◆ 6 for diagonal lenticular lens.
         ◆ 7 for multi projectors (real projectors, eye wear, and so on).
      - b, c and d are the geometrical parameters of the 3D technology
         ◆ If a=1, a=2, a=4 or a=5, b is the number of views and c=0 and d=0 (unused parameters).
         ◆ If a=3 or a=6, b is the number of views and c and d are the x and y parameters of the diagonal mesh.
         ◆ If a=7, b is the number of projectors and c=0 and d=0 (unused parameters).
   ➢ An **integer couple** representing the screen size (in mm). It might be unused in the case of projectors.
   ➢ An **integer couple** representing the screen resolution.

## Claims

1. A telecommunication device for transmitting data flows comprising 3D video data, said telecommunication system comprising:
- a 3D video acquiring unit (10) for acquiring a plurality of image flows from different viewpoints,
- a hardware element (21) operable to process and compress the plurality of image flows into one compressed data flow, said compressed data flow comprising 3D video data for a subsequent 3D image flow generation,
- a transmitting element (30) operable to communicate the compressed data flow over a communication network.

2. A telecommunication device according to claim 1 wherein the hardware layer (21) comprises at least one of a DSP, FPGA, ASIC or VLSI.

3. A telecommunication device according to one of the claims 1 and 2 wherein the hardware element (21) is further operable to generate a flow of single images from the plurality of image flows by aggregating images taken at the same instant from each image flow into one single image,.

4. A telecommunication device according to claim 3, wherein the hardware element (21) is further operable to concatenate the images taken at the same instant from each image flow into one single image.

5. A telecommunication device according to any of the preceding claims, wherein the communicated compressed data flow is communicated for subsequent display on a 3D display device and wherein the compressed data flow is deprived of said 3D display data.

6. A telecommunication system for transmitting data flows comprising 3D video data, said telecommunication system comprising:
- a 3D video acquiring unit (10) for acquiring a plurality of image flows from different viewpoints,
- a hardware element (21) operable to process and compress the plurality of image flows into one compressed data flow, said compressed data flow comprising 3D video data for a subsequent 3D image flow generation,
- a transmitting element (30) operable to communicate the compressed data flow over a communication network,
- a receiving unit (40) for receiving the compressed data flow,
- a decompression unit (41) operable to decompress the compressed data flow into a plurality of image flows, said plurality of image flows comprising 3D video data,
- a 3D application layer (43) operable to process the plurality of image flows into 3D image flows,
- a 3D display unit (50, 60) operable to display the 3D image flow.

7. A telecommunication system according to claim 6 wherein the hardware layer (21) comprises at least one of a DSP, FPGA, ASIC or VLSI.

8. A telecommunication system according to one of the claims 6 and 7 wherein the hardware element (21) is further operable to concatenate into one single image the images taken from a plurality of image flow at the same instant.

9. A telecommunication system according to any of the preceding claims 6 to 8, wherein the display unit comprised a rendering unit (50) and a 3D display device (60), said rendering unit being operable to adapt and display the 3D image flows onto said 3D display device (60) using sub-sampling of said 3D image flows.

10. A telecommunication system according to any of the preceding claims 6 to 9, wherein the 3D video acquiring unit (10), the hardware layer (21) and the transmitting element (30) are comprised in an emitting device, while the receiving unit (40), the decompression unit (41), the 3D application layer (43) and the 3D display unit (50, 60) are comprised in a receiving device.

11. A method for transmitting data flows comprising 3D video data from a telecommunication device attached to a communication network, said method comprising the steps of:
- acquiring a plurality of image flows from different viewpoints,
- compressing the plurality of image flows into one compressed data flow using a hardware element (21), said compressed data flow comprising 3D video data for a subsequent 3D image flow generation,
- transmitting the compressed data flow over the communication network.

12. The method according to claim 11, wherein the compressing step further comprises the step of generating a flow of single images from the plurality of image flows by aggregating images taken at the same instant from each image flow into one single image,.

13. The method according to claim 12, wherein the compressing step further comprises the step of concatenating the images taken at the same instant from each image flow into one single image.
